# FASCICULE DE BREVET EUROPEEN

(11) **EP 3 545 286 B1**
(45) Date de publication et mention de la délivrance du brevet: **08.11.2023**
(21) Numéro de dépôt: 17816929.8
(22) Date de dépôt: 28.11.2017
(51) Int. Cl.: G01N 23/20

(54) **PROCÉDÉ DE CONTRÔLE NON DESTRUCTIF D'UNE PIÈCE DE TURBOMACHINE**
VERFAHREN ZUR ZERSTÖRUNGSFREIEN PRÜFUNG EINES TURBOMASCHINENTEILS
METHOD FOR NON-DESTRUCTIVE TESTING OF A TURBOMACHINE PART

(30) Priorité: 28.11.2016 FR 1661602
(43) Date de publication de la demande: 02.10.2019
(73) Titulaire: Safran, 75015 Paris (FR); Safran Aircraft Engines, 75015 Paris (FR); Centre National de la Recherche Scientifique, 75794 Paris Cedex 16 (FR); "Association Pour La Recherche et le Developpement des Méthodes et Processus Industriels" - A.R.M.I.N.E.S., 75006 Paris (FR)
(72) Inventeur: REMACHA, Clément, 77550 Moissy-Cramayel (FR); ROMERO, Edward, 77550 Moissy-Cramayel (FR); ARNAUD, Alexiane, 75013 Paris (FR); PROUDHON, Henry, 77930 Perthes (FR); HERBLAND, Thibault, 77550 Moissy-Cramayel (FR)
(74) Mandataire: Ernest Gutmann - Yves Plasseraud S.A.S.
(86) Numéro de dépôt international: PCT/FR2017/053277
(87) Numéro de publication internationale: WO 2018/096302

(56) Documents cités:
- EP-A1- 3 147 653
- EP-A2- 2 541 237
- CA-A1- 2 544 464
- FR-A1- 2 636 141
- US-A1- 2010 239 068

## Description

La présente invention concerne une méthode de contrôle non destructif de la structure interne d'une pièce, plus particulièrement de l'orientation cristalline des grains de matière d'une pièce de turbomachine.

Les pièces de turbomachine, en particulier les aubes de turbine qu'elles soient mobiles ou fixes, sont soumises à de fortes contraintes mécaniques lors du fonctionnement de la turbomachine. Les aubes doivent donc être très résistantes pour éviter leur détérioration et la génération de débris pouvant impacter le bon fonctionnement de la turbomachine. Ces aubes présentent une structure monocristalline, la croissance des grains étant contrôlée par l'intermédiaire d'un sélecteur de grains. Ces aubes à géométrie complexe contenant des cavités internes permettant d'assurer le refroidissement, présentent une structure monocristalline, la croissance des grains étant contrôlée par l'intermédiaire d'un sélecteur de grains.

Préalablement au montage des aubes dans la turbomachine, il est usuel d'effectuer un ensemble d'opérations de contrôle afin de s'assurer de la conformité de fabrication des aubes. Des exemples de tels contrôles sont donnés dans EP 3 147 653 A1 qui relève de l'Article 54(3) CBE et EP 2 541 237 A2.

Cette opération peut notamment être réalisée par détermination de l'orientation des grains de matière de l'aube, également appelée orientation cristalline, et par la recherche de grains étrangers dans l'aube. En effet, il est connu que, plus l'orientation des différents grains est identique ou quasi-identique, plus l'aube est résistante.

Un grain étranger dans l'aube peut survenir pendant le processus d'élaboration de l'aube monocristalline ou pendant les phases de traitement thermique. Il s'agit d'une partie de l'aube, de taille variable, dont l'orientation cristalline est différente de l'orientation de croissance. Un grain étranger apparait dans l'aube de manière aléatoire, il peut donc se placer en surface de l'aube, touchant les parois externes, ou rester dans les cavités internes de l'aube.

Une méthode connue pour contrôler l'orientation des grains est de faire une attaque chimique de l'aube puis d'observer les aubes dans une solution. Une désorientation de grains, c'est-à-dire une orientation différente de grains, sur l'aube sera visible par une modification de la réflexion de la lumière sur l'aube, et donc une zone plus ou moins claire sur l'aube.

Cette méthode donne satisfaction pour le contrôle extérieur, c'est-à-dire de l'état de surface, de l'aube mais le contrôle de la structure interne de l'aube ne peut être fait que par une découpe de la pièce qui implique donc une destruction de la pièce. Ainsi, pour une production en série, le contrôle de la structure cristalline interne des aubes n'est réalisé que lors de l'industrialisation de la pièce et de la mise sous contrôle du processus de fabrication.

Or, les aubes de turbine comprennent de plus en plus de cavités internes complexes, ce qui amène une probabilité d'apparition de grains internes non négligeable impliquant un risque de vieillissement précoce de l'aube. Dès lors, le contrôle non destructif individuel des aubes s'avère de plus en plus important.

Il est à noter que le changement d'orientation des grains de matière de l'aube s'effectue par un décalage angulaire par rapport à une orientation théorique correspondant à l'axe de croissance du cristal contrôlée par l'intermédiaire d'un sélecteur de grains. Cet axe de croissance correspond à l'axe d'empilage du moteur et s'étend radialement par rapport à l'axe de rotation.

L'invention a notamment pour but d'apporter une solution simple, efficace et économique à ce problème.

A cet effet, l'invention propose un procédé de contrôle de l'orientation cristalline d'au moins un grain d'une pièce de turbomachine selon la revendication 1.

Au contraire de la technique antérieure qui ne réalise qu'une analyse de la surface de la pièce, l'invention propose de réaliser un contrôle de la structure interne de la pièce en procédant à une analyse d'un faisceau d'un rayonnement électromagnétique diffracté au travers de la pièce en une pluralité de localisations différentes sur la pièce, c'est-à-dire dans au niveau d'une zone donnée en vis-à-vis des moyens d'émission du rayonnement électromagnétique. On notera que le rayonnement électromagnétique traverse les différentes parois ou cloisons internes de la pièce, ces parois ou cloisons pouvant être formées à l'intérieur d'une aube. La figure de diffraction obtenue permet de déduire la présence de grains cristallographiques sur la pièce et d'en déterminer l'orientation individuelle. Pour déterminer un état d'utilisation de la pièce, c'est-à-dire par exemple si la pièce peut être utilisée ou mise au rebut. L'invention propose de comparer l'orientation cristalline d'au moins deux grains avec une direction prédéterminée de la pièce, cette direction pouvant correspondre par exemple à une direction selon laquelle le grain de matière devrait s'étendre dans une situation idéale/théorique. En pratique, à partir de l'information bidimensionnelle obtenue au travers du faisceau diffracté, on obtient une information relative à l'orientation spatiale des au moins deux grains de l'aube.

Le terme « haute énergie » se réfère à des énergies supérieures à 100 KV tels que les rayonnements X ou gamma par exemple. Les rayonnements ne pouvant pas traverser la pièce sont ici exclus.

Selon l'invention, les écarts d'orientation entre deux grains sont pris en considération ce qui permet de prendre une décision sur l'état d'utilisation de la pièce à partir d'un état relatif entre deux grains de la pièce.

On comprend également que l'invention permet de prendre en compte l'orientation de tous grains cristallographiques de la pièce. Pour cela, il suffit de mesurer un écart angulaire entre l'orientation spatiale cristalline de chacun des grains et la direction prédéterminée prise sur la pièce, chaque écart angulaire ainsi mesurée étant comparée à la première valeur seuil prédéterminée. De plus, une comparaison deux à deux entre chaque couple de grains est réalisée comme décrit en relation avec les étapes i à v ci-dessus mentionnées.

Dans une réalisation pratique de l'invention, la première valeur seuil prédéterminée est comprise entre de l'ordre de -15° et de l'ordre de 15°. La seconde valeur seuil prédéterminée peut être comprise entre de l'ordre de -12° et de l'ordre de 12°.

Préférentiellement, la détermination de l'état d'utilisation consiste à mettre au rebut la pièce si l'un des écarts est supérieur à un seuil prédéterminé auquel il est comparé.

Avantageusement, l'identification de la présence d'un grain est réalisée par comparaison d'une image de diffraction du rayonnement ayant traversé la pièce à une base de données comprenant des images de diffraction de référence correspondant à des orientations connues de grains dans une pièce, de préférence de même type que la pièce analysée. Dans cette première approche, il serait possible d'utiliser une fonction de corrélation pour établir une ressemblance entre l'image de diffraction obtenue et une image de diffraction en base de données pour laquelle l'orientation des grains est connue.

Il est encore possible d'effectuer une détection des pics sur l'image de diffraction et de comparer la position des pics avec une base de données de positions de référence pour des pics connus dont on connait l'orientation cristalline.

Les images de diffraction de référence peuvent être des images de diffraction obtenues par expérimentation sur des pièces réelles ou sur des pièces simulées numériquement du point de vue cristallographique. De préférence, l'information de diffraction consiste en une image de diffraction obtenue à partir du faisceau diffracté au travers de la pièce.

Avantageusement, le faisceau de rayonnement électromagnétique est un faisceau de rayons X.

Selon une autre caractéristique, on procède à une identification de tous grains cristallographiques de la zone donnée de la pièce, la zone donnée de la pièce pouvant correspondre à l'intégralité de la pièce.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique en perspective d'une aube de turbine ayant une structure interne comprenant un seul grain ;
- la figure 2 est une vue schématique en perspective d'une aube de turbine ayant une structure interne comprenant une pluralité de grains ;
- la figure 3 est une représentation schématique d'un dispositif d'obtention de figure de diffraction d'un rayonnement électromagnétique au travers d'une pièce à contrôler ;
- la figure 4 est une représentation schématique d'une aube de turbine comprenant un seul grain ;
- la figure 5 est une illustration d'une image de diffraction obtenue au travers de la pièce de la figure 4 ;
- la figure 6 est une représentation schématique d'une aube de turbine comprenant deux grains ;
- la figure 7 est une illustration d'une image de diffraction obtenue au travers de la pièce de la figure 6.

Il est rappelé que le terme « grain » désigne une zone où les atomes sont parfaitement ordonnés selon un agencement cristallographique donné.

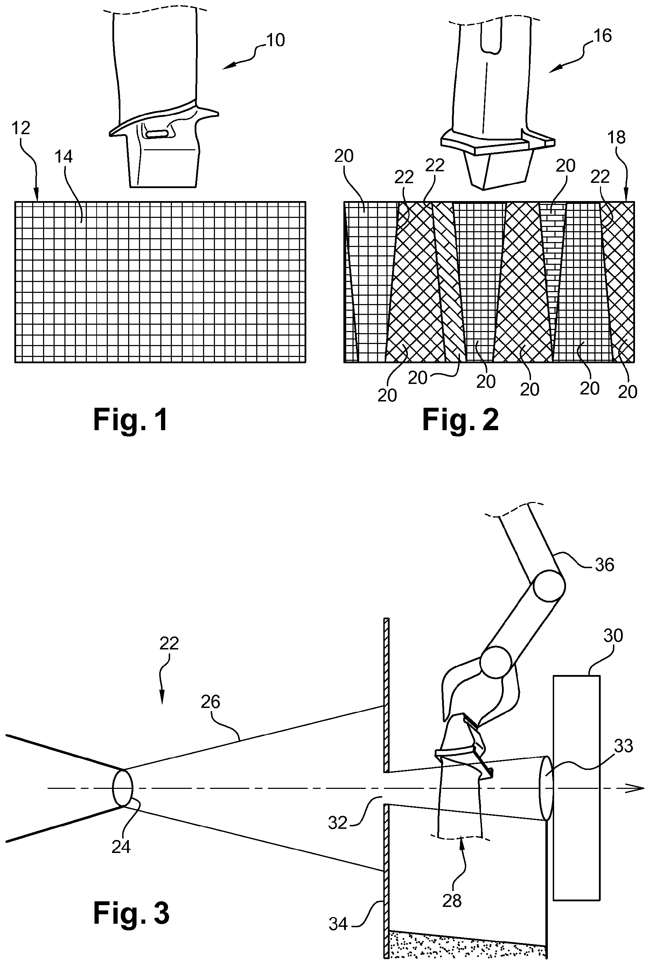

On a représenté en figure 1 une aube de turbine 10 (haut) ainsi que la structure interne 12 (bas) de cette aube 10 qui comprend un seul grain 14. La figure 2 représente une aube de turbine 16 (haut) et sa structure interne 18 comprenant un grain étranger 20. Ce grain étranger 20 est délimité avec la structure interne théorique 18 par un joint de grain 22.

Comme indiqué précédemment, l'invention propose un procédé et un dispositif permettant une analyse de la microstructure d'une aube afin de donner une information relative quant à la conformité de fabrication de la pièce et ainsi en déduire si l'aube est apte ou non à être utilisée dans une turbomachine, c'est-à-dire si elle est apte à tenir les sollicitations mécaniques en fonctionnement.

A cette fin, le dispositif 22 comprend une source de rayonnement 24 électromagnétique de haute énergie, plus particulièrement une source de rayons X apte à émettre un faisceau 26 en direction d'une aube 28 à contrôler. Il comprend également des moyens de collecte bidimensionnels et d'enregistrement 30 du faisceau diffracté au travers de la pièce 28. Un premier masque 32 est intercalé entre la source 24 de rayonnement et la pièce 28 et comprend une ouverture 34 configurée de manière à ce qu'une partie seulement de la pièce 28 soit soumise au rayonnement incident, représentant la région de mesure. Ce premier masque 32 permet également de limiter les réflexions parasites. Un second masque 33 réalisé dans un matériau apte à fortement absorber les rayonnements provenant de la source sera aligné avec l'ouverture 34 afin de supprimer le faisceau direct (ordre 0) du signal enregistré. La zone à contrôler de la pièce 28 peut être mise en position dans le faisceau au moyen d'un bras préhenseur 36 piloté par ordinateur. Le montage utilisé est ici un montage du type Laue par transmission.

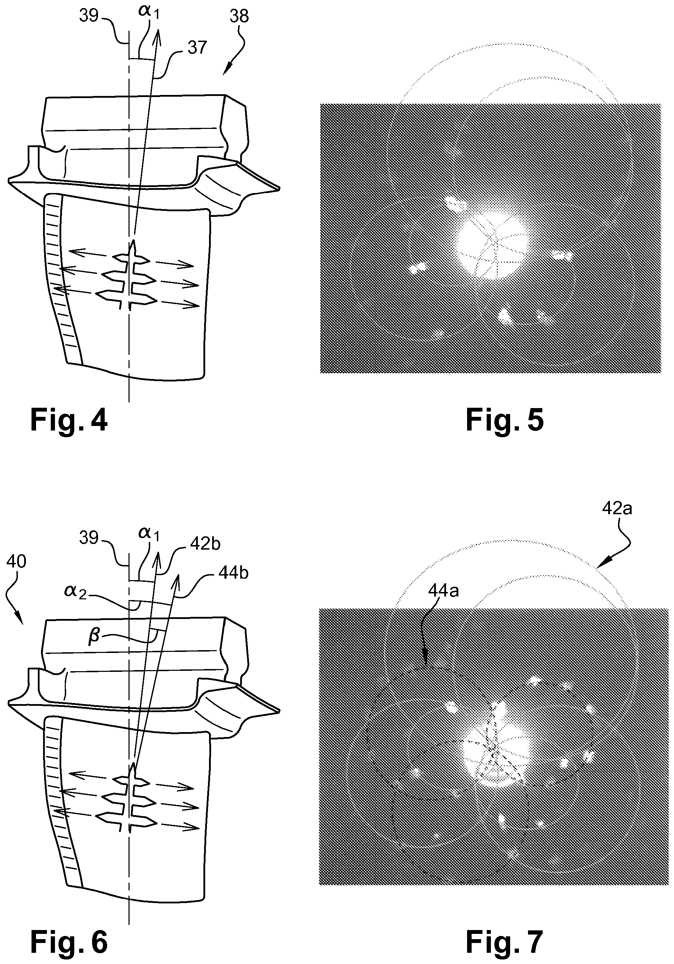

Le dispositif 22 selon l'invention est ainsi utilisé de la manière suivante. Un faisceau 26 de rayons X traverse la pièce 28 au niveau d'un volume élémentaire de celle-ci et est collecté par un capteur numérique bidimensionnel à détection indirecte (classiquement un capteur numérique plan avec un scintillateur à iodure de césium) ou directe (compteur de photon RX). L'information obtenue est une information de diffraction du faisceau de rayons X qui peut être représentée sous la forme d'une image de diffraction (figure 5). Cette image de diffraction représente un exemple d'une figure de diffraction obtenue lorsque l'aube 38 comprend un seul grain cristallographique.

A partir d'une telle image de diffraction il est possible de déterminer le nombre de grains dans la zone de la pièce observée par rayons X. Cette identification peut être effectuée par comparaison avec des images de référence stockées dans une base de données, ces images de référence correspondant à des orientations connues de grains dans une pièce de même type que la pièce analysée. Les images de diffraction de référence sont des images de diffraction obtenues par expérimentation sur des pièces réelles ou sur des pièces simulées numériquement.

Après avoir déterminé l'orientation spatiale du volume élémentaire de l'aube 38, le procédé consiste ensuite à déplacer la pièce au moyen du bras 36 de manière à balayer une zone donnée de la pièce ou encore par exemple l'intégralité de celle-ci lorsque l'on souhaite contrôler son entièreté. On obtient ainsi une pluralité d'information de diffraction à chacune des positions de la pièce et il est possible de déterminer l'orientation cristalline à chacune desdites localisations de la pièce.

On détermine ensuite les volumes élémentaires présentant une orientation cristalline identique formant dès lors un grain donné, par exemple un premier grain.

On calcule ensuite l'écart angulaire entre l'orientation angulaire 37 obtenue sur l'aube 38 pour ledit volume d'intérêt identifié et la direction longitudinale 39 de l'aube, c'est-à-dire la direction s'étendant du pied au sommet de l'aube et qui correspond sensiblement à la direction radiale, c'est-à-dire perpendiculaire à l'axe de rotation des rotors de la turbomachine (figure 4).

Cet écart angulaire *α*₁ est comparé à une première valeur seuil prédéterminée qui peut être comprise entre de l'ordre de -15° et de l'ordre de 15°. En effet, au-delà de cette gamme de valeurs, les sollicitations mécaniques appliquées à l'aube en fonctionnement seraient trop importantes pour un tel grain, ce qui pourrait conduire à un endommagement de l'aube.

Si l'écart angulaire *α*₁ mesuré est supérieur à la première valeur seuil, alors il convient de mettre l'aube contrôlée au rebut puisque cela indique que le seul et unique grain de l'aube est trop fortement désaligné par rapport à l'orientation idéale souhaitée qui est celle de l'axe longitudinale de l'aube. Ainsi, dans un tel cas, l'aube subirait en fonctionnement des contraintes mécaniques trop importantes par rapport à l'orientation des atomes.

Dans une deuxième configuration possible d'une aube 40 comprenant deux grains différents (figure 6), on obtient alors une figure de diffraction sur l'image de diffraction (figure 7) qui est différente de celle obtenue pour l'aube avec un seul grain. Cette image comprend deux séries de cercles 42a, 44a, la première série 42a de cercles (traits pleins) correspond à un premier grain de la pièce et la seconde série 44a de cercles (traits pointillés) correspond à un second grain de l'aube 40.

Pour déterminer si l'aube qui comprend deux grains 42, 44, alors qu'en théorie elle ne devrait comprendre qu'un seul grain orienté selon la direction longitudinale, le procédé selon l'invention consiste donc à déterminer l'orientation spatiale 42b, 44b du premier grain 42 et du second grain 44 et à mesurer l'écart angulaire *α*₁ et *α*₂ de chacune des orientations 42b, 44b avec la direction longitudinale 39. Si l'un des deux écarts angulaires *α*₁ et *α*₂ est supérieur à la première valeur seuil, alors il convient de mettre la pièce au rebut. Toutefois, dans le cas où ces deux écarts angulaires *α*₁ et *α*₂ sont inférieurs à la première valeur seuil prédéterminée, alors il convient de calculer l'écart angulaire *β* entre l'orientation spatiale dudit premier grain et l'orientation spatiale dudit second grain et de comparer ce nouvel écart angulaire *β*, que l'on peut qualifier d'écart inter-grains, avec une seconde valeur seuil prédéterminée. Il convient alors que l'écart angulaire *β* soit inférieur à la seconde valeur seuil prédéterminée pour la pièce ne soit pas mise au rebut.

Avec le procédé selon l'invention, il est ainsi possible de déterminer si l'orientation spatiale d'un grain est acceptable au regard de l'orientation nominale que devrait avoir ce grain et si la présence de plusieurs grains d'orientations différentes est également acceptable.

Si le procédé selon l'invention a été décrit en référence à une seule partie de l'aube, on comprend que le procédé peut être répété de manière successive sur toute la hauteur de la pièce pour ainsi effectuer un contrôle non destructif de celle-ci sur toute sa hauteur.

Il est à noter que pour pouvoir effectuer les mesures d'écarts angulaires précités à partir des orientations spatiales des grains, on obtient en premier une orientation spatiale de chacun des grains dans le repère des moyens de collecte 30 (ou capteur). On effectue alors un changement de repère de l'orientation spatiale du repère des moyens de collecte dans le repère du bras préhenseur 36 puis un changement de repère du bras préhenseur dans le repère de la pièce 38, 40.

## Revendications

1. Procédé de contrôle de l'orientation cristalline d'au moins un grain cristallographique d'une pièce de turbomachine (10, 16, 28, 38, 40), comprenant les étapes consistant à :
a) émettre un faisceau (26) d'un rayonnement électromagnétique au travers de la pièce au niveau d'un volume élémentaire de la pièce et enregistrer une information de diffraction du rayonnement électromagnétique au travers de la pièce ;
b) répéter l'étape a) sur une pluralité de volumes élémentaires balayant une zone donnée de la pièce,
c) déterminer une orientation spatiale cristalline de chacun desdits volumes élémentaires et en déduire la présence d'au moins un premier grain (42) cristallographique pour lequel les volumes élémentaires sont orientés selon une même orientation cristallographique (42b);
d) calculer l'écart angulaire (α₁) entre l'orientation spatiale cristalline dudit premier grain et une direction prédéterminée (39) prise sur la pièce et le comparer à une première valeur seuil prédéterminée ;
e) déterminer un état d'utilisation de la pièce, ladite étape e) comprenant en outre les étapes suivantes :
i. identifier dans la zone donnée la présence d'au moins un premier grain et un second grain (44) cristallographiques distincts à partir de l'information de diffraction ;
ii. déterminer une orientation spatiale (44b) dudit second grain de la pièce à partir de l'information de diffraction ;
iii. calculer l'écart angulaire (α₂) entre l'orientation spatiale dudit second grain et ladite direction prédéterminée de la pièce et le comparer à la première valeur seuil prédéterminée ;
iv. calculer l'écart angulaire (β) entre l'orientation spatiale dudit premier grain et l'orientation spatiale dudit second grain et le comparer à une seconde valeur seuil prédéterminée ;
v. déterminer l'état d'utilisation de la pièce des étapes d), iii) et iv).

2. Procédé selon la revendication 1, dans lequel la première valeur seuil prédéterminée est comprise entre de l'ordre de -15° et de l'ordre de 15°.

3. Procédé selon l'une des revendications 1 à 2, dans lequel la seconde valeur seuil prédéterminée est comprise entre de l'ordre de -12° et de l'ordre de 12°.

4. Procédé selon l'une des revendications 1 à 3, dans lequel la détermination de l'état d'utilisation consiste à mettre au rebut la pièce si l'un des écarts est supérieur à un seuil prédéterminé auquel il est comparé.

5. Procédé selon l'une des revendications 1 à 4, dans lequel l'identification de la présence d'un grain est réalisée par comparaison d'une image de diffraction du rayonnement ayant traversé la pièce à une base de données comprenant des images de diffraction de référence correspondant à des orientations connues de grains dans une pièce, de préférence de même type que la pièce analysée ou par comparaison de la position des pics sur l'image de diffraction avec des positions de référence de pics connus contenus dans une base de données .

6. Procédé selon la revendication 5, dans lequel les images de diffraction de référence sont des images de diffraction obtenues par expérimentation sur des pièces réelles ou sur des pièces simulées numériquement du point de vue cristallographique.

7. Procédé selon l'une des revendications 1 à 6, dans lequel l'information de diffraction consiste en une image de diffraction obtenue à partir du faisceau diffracté au travers de la pièce.

8. Procédé selon l'une des revendications précédentes, dans lequel la pièce est une aube d'une turbine de turbomachine, la direction prédéterminée prise sur la pièce étant la direction longitudinale s'étendant entre le pied et le sommet de l'aube.

9. Procédé selon l'une des revendications précédentes, dans lequel le faisceau de rayonnement électromagnétique est un faisceau de rayons X.

10. Procédé selon l'une des revendications 1 à 9, dans lequel on procède à une identification de tous grains cristallographiques de la zone donnée de la pièce, la zone donnée de la pièce pouvant correspondre à l'intégralité de la pièce.

## Patentansprüche

1. Verfahren zur Prüfung der Kristallorientierung zumindest eines kristallographischen Korns eines Turbomaschinen- bzw. Turbotriebwerkbauteils (10, 16, 28, 38, 40), umfassend die folgenden Schritte:
a) Aussenden eines Strahls (26) elektromagnetischer Strahlung durch das Bauteil hindurch im Bereich eines Elementarvolumen des Bauteils und Aufzeichnen einer Information über die Beugung der elektromagnetischen Strahlung durch das Bauteil hindurch;
b) Wiederholen von Schritt a) an einer Vielzahl von Elementarvolumina, die einen gegebenen Bereich des Bauteils abdecken,
c) Bestimmen einer räumlichen Kristallorientierung jedes der Elementarvolumina und Schließen auf das Vorhandensein von zumindest einem ersten kristallographischen Korn (42), bei dem die Elementarvolumina gemäß einer gleichen kristallographischen Orientierung (42b) gerichtet sind;
d) Berechnen der Winkelabweichung (α₁) zwischen der räumlichen Kristallorientierung des ersten Korns und einer am Bauteil genommenen vorbestimmten Richtung (39), und Vergleichen derselben mit einem ersten vorbestimmten Schwellenwert;
e) Bestimmen eines Gebrauchszustands des Bauteils,
wobei der Schritt e) ferner die folgenden Schritte umfasst:
i. Erkennen, in dem gegebenen Bereich, des Vorhandenseins von zumindest einem ersten Korn und einem zweiten Korn (44), die kristallographisch unterschiedlich sind, anhand der Beugungsinformation;
ii. Bestimmen einer räumlichen Orientierung (44b) des zweiten Korns des Bauteils anhand der Beugungsinformation;
iii. Berechnen der Winkelabweichung (α₂) zwischen der räumlichen Orientierung des zweiten Korns und der vorbestimmten Richtung des Bauteils und Vergleichen derselben mit dem ersten vorbestimmten Schwellenwert;
iv. Berechnen der Winkelabweichung (β) zwischen der räumlichen Orientierung des ersten Korns und der räumlichen Orientierung des zweiten Korns und Vergleichen derselben mit einem zweiten vorbestimmten Schwellenwert;
v. Bestimmen des Gebrauchszustands des Bauteils aus den Schritten d), iii) und iv).

2. Verfahren nach Anspruch 1,
wobei der erste vorbestimmte Schwellenwert in der Größenordnung von -15° bis in der Größenordnung von 15° liegt.

3. Verfahren nach einem der Ansprüche 1 bis 2,
wobei der zweite vorbestimmte Schwellenwert in der Größenordnung von -12° bis in der Größenordnung von 12° liegt.

4. Verfahren nach einem der Ansprüche 1 bis 3,
wobei die Bestimmung des Gebrauchszustands darin besteht, das Bauteil auszusondern, wenn eine der Abweichungen größer als ein vorbestimmter Schwellenwert ist, mit dem sie verglichen wird.

5. Verfahren nach einem der Ansprüche 1 bis 4,
wobei die Erkennung des Vorhandenseins eines Korns durch Vergleichen eines Beugungsmusters der Strahlung, die das Bauteil durchlaufen hat, mit einer Datenbank erfolgt, die Referenz-Beugungsmuster enthält, die bekannten Orientierungen von Körnern in einem Bauteil entsprechen, vorzugsweise vom gleichen Typ wie das untersuchte Bauteil, oder durch Vergleichen der Position von Peaks in dem Beugungsmuster mit Referenzpositionen bekannter Peaks, die in einer Datenbank enthalten sind.

6. Verfahren nach Anspruch 5,
wobei die Referenz-Beugungsmuster Beugungsmuster sind, die durch Erprobung an realen Bauteilen oder an in kristallographischer Hinsicht numerisch simulierten Bauteilen gewonnen werden.

7. Verfahren nach einem der Ansprüche 1 bis 6,
wobei die Beugungsinformation aus einem Beugungsmuster besteht, das aus dem durch das Bauteil hindurch gebeugten Strahl gewonnen wird.

8. Verfahren nach einem der vorhergehenden Ansprüche,
wobei das Bauteil eine Turbinenschaufel einer Turbomaschine bzw. eines Turbotriebwerks ist, wobei die am Bauteil genommene vorbestimmte Richtung die Längsrichtung ist, die sich zwischen dem Schaufelfuß und der Schaufelspitze der Schaufel erstreckt.

9. Verfahren nach einem der vorhergehenden Ansprüche,
wobei der Strahl elektromagnetischer Strahlung und ein Röntgenstrahl ist.

10. Verfahren nach einem der Ansprüche 1 bis 9,
wobei eine Erkennung aller kristallographischen Körner des gegebenen Bereichs des Bauteils erfolgt, wobei der gegebene Bereich des Bauteils dem gesamten Bauteil entsprechen kann.

## Claims

1. A method for controlling the crystal orientation of at least one crystallographic grain of a turbo engine part (10, 16, 28, 38, 40), comprising the steps of:
a) emitting a beam (26) of electromagnetic radiation through an elementary volume of the part and record diffraction information on the electromagnetic radiation passing through the part;
b) repeating step a) on a given area of the part,
c) determining a crystal spatial orientation of each of said elementary volumes and deducting the presence of at least one first crystallographic grain (42) for which the elementary volumes are oriented according to the same crystallographic orientation (42b);
d) calculating the angular difference (*α*₁*)* between the crystal spatial orientation of said first grain and a predetermined direction (39) taken from the part and comparing it to a first predetermined threshold value;
e) determining a state of use of the part.
said step e) further comprising the following steps:
i. identifying in the given area the presence of at least a first and second distinct crystallographic grain (44) from the diffraction information;
ii. determining a spatial orientation (44b) of said second grain of the part from the diffraction information;
iii. calculating the angular deviation (*α*₂) between the spatial orientation of said second grain and said predetermined direction of the part and comparing it to the first predetermined threshold value;
iv. calculating the angular difference (*β*) between the spatial orientation of said first grain and the spatial orientation of said second grain and comparing it to a second predetermined threshold value;
v. determining the state of use of the part in steps d), iii) and iv).

2. The process according to claim 1, wherein the first predetermined threshold value is between about -15° and about 15°.

3. The method according to one of claims 1 to 2, wherein the second predetermined threshold value is between about -12° and about 12°.

4. The method according to one of claims 1 to 3, wherein the determination of the state of use results in scrapping the part if one of the deviations is greater than a predetermined threshold to which it is compared.

5. The method according to one of claims 1 to 4, wherein the identification of the presence of a grain is carried out by comparing a diffraction image of the radiation that has passed through the part with a database comprising reference diffraction images corresponding to known orientations of grains in a part, preferably of the same type as the part analysed, or by comparing the position of the peaks on the diffraction image with known peak reference positions contained in a database.

6. The method according to claim 5, wherein the reference diffraction images are diffraction images obtained by experimentation on real parts or on parts digitally simulated from a crystallographic point of view.

7. The method according to one of claims 1 to 6, wherein the diffraction information consists of a diffraction image obtained from the beam diffracted through the part.

8. The method according to one of the above claims, wherein the part is a blade of a turbo engine turbine, the predetermined direction taken on the part being the longitudinal direction extending between the foot and the top of the blade.

9. The method according to one of the above claims, wherein the beam of electromagnetic radiation is an X-ray beam.

10. The method according to one of claims 1 to 9, wherein an identification of all crystallographic grains of the given area of the part is carried out, the given area of the part possibly corresponding to the entire part.
